Europäisches Patentamt

European Patent Office

Office européen des brevets

(11) Publication number: **0 556 965 A1**

## EUROPEAN PATENT APPLICATION

(21) Application number: 93300678.5

(22) Date of filing: 29.01.93

(51) Int. Cl.⁵: **C08F 4/14**, C08F 210/08

(30) Priority: **19.02.92 GB 9203489**

(43) Date of publication of application:
**25.08.93 Bulletin 93/34**

(84) Designated Contracting States:
**BE DE FR GB**

(71) Applicant: **BP Chemicals Limited**
**Britannic House 1 Finsbury Circus**
**London EC2M 7BA(GB)**

(72) Inventor: **Samson, John Norman Reid**
**BP Chemicals Limited, PO Box 21, Bo'Ness**
**Road**
**Grangemouth, Stirlingshire FK3 9XH(GB)**

(74) Representative: **Krishnan, Suryanarayana**
**Kalyana et al**
**BP INTERNATIONAL LIMITED Patents &**
**Agreements Division Chertsey Road**
**Sunbury-on-Thames Middlesex TW16 7LN**
**(GB)**

(54) **Poly(iso)butenes.**

(57) This invention relates to a process for producing polybutenes by cationic polymerization of a feedstock comprising isobutenes in the presence of an organoaluminium halide catalyst at a temperature between -50°C and +50°C characterized in that the catalyst is modified with a nitroalkane. The use of nitroalkanes as modifier enables polybutenes to be produced which have the unsaturated linkage in the terminal position. Such polybutenes are suitable raw materials for producing lubricating oil additives and fuel additives.

The present invention relates to a process for the production of polyisobutenes and in particular to polyisobutenes which have a relatively high degree of terminal unsaturation.

Methods of polymerising isobutenes whether pure or in an isomeric mixture as in a $C_4$ raffinate using a Friedel-Crafts type catalyst is well-known. Typical of such catalysts are the halides of aluminiun, iron, zinc, titanium, tin, mercury and boron. These catalysts have also been used in conjunction with small amounts of co-catalysts such as water, alcohol, sulphur dioxide, carboxylic acids, mineral acids, ethers and alkyl halides to enhance catalyst activity. The reaction has been carried out in the liquid or gaseous phases, batchwise or continuously, at temperatures ranging from -100° to +100°C.

It is also known that the polymerisation of isobutene using a Friedel-Crafts type catalyst is a cationic process which proceeds through formation of intermediate carbonium ions.

The product of this reaction is generally a mixture of polymers which have the unsaturated linkage in the terminal or internal position within the polymer. Conventional cationic processes generally yield a polymer with a relatively higher proportion of internal unsaturation compared with those having terminal unsaturation. This is due to the "in situ" isomerisation of the unsaturated linkage to an internal position and is inherent to most cationic polymerisation processes.

The internal unsaturation is believed to be less desirable than the terminal unsaturation because of its relatively lower chemical reactivity when compared with terminally unsaturated polymers. This is especially true of its reactivity towards compounds such as maleic anhydride which reaction forms an adduct called polyisobutene succinic anhydride (PIBSA). These adducts are most valuable products and form the basis of the lubricating oil additives industry.

Some methods have been proposed for minimising the amount of internal unsaturation in such polymers. One such method is described in US patent No. 3166546 which suggests the use of a sulphur dioxide modified boron trifluoride catalyst to polymerise isobutene in the gaseous phase over a period of 3 seconds to 10 minutes to produce polyisobutenes having at least 85% terminal unsaturation.

Similarly, EP-A-16312 proposes the use of a boron trifluoride catalyst optionally modified by water or alcohol to polymerise isobutene over a period of 1-40 seconds to produce a polymer having 60-100% terminal unsaturation.

It has now been found that a product predominating in terminal unsaturation can be found by the use of a specific modifier to the catalyst.

Accordingly, the present invention is a process for producing polyisobutenes by cationic polymerisation of a feedstock comprising isobutenes in the presence of an organoaluminium halide catalyst at a temperature between -50° and +50°C characterised in that the catalyst is modified with a nitroalkane, $R^1$-$NO_2$ wherein $R^1$ is a $C_1$-$C_4$ alkyl group.

The feedstock used in the polymerisation process may be pure isobutene or a mixed $C_4$ hydrocarbon feedstock such as that resulting from the thermal or catalytic cracking operation conventionally known as a butadiene raffinate (BDR). The feedstock used suitably contains at least 10% by weight of isobutenes. It is preferable to use a feedstock containing at least 15% by weight of isobutene and most preferably that containing at least 50% by weight of isobutene. The hydrocarbon feedstock used may contain in addition to isobutene between 10 and 20% by weight of butanes and/or between 20 and 40% by weight of normal butenes without adverse effect on the polyisobutene product.

The organoaluminium halide is preferably of the general formula $R_nAlX_{3-n}$ where R may be a $C_1$ to $C_6$ alkyl radical and X may either be chlorine or bromine and n is 1 or 2. Where the organoaluminium halide has more than one alkyl group, these alkyl groups may be the same or different. Ethyl aluminium dihalides and particularly ethyl aluminium dichloride, are preferred.

The nitroalkane $R^1$-$NO_2$ may be nitromethane, nitroethane or nitropropane, but is preferably nitroethane.

The catalyst composition may contain in addition a promoter such as a tertiary alkyl halide, preferably tertiary butyl halide and in particular tertiary butyl chloride.

The relative concentrations of the organoaluminium halide, the alkyl halide and the nitroalkene in the catalyst composition used in the present invention may vary over a moderately wide range depending upon the nature of the organoaluminium halide used. Thus, the molar ratio of the organoaluminium halide to nitroalkane is suitably between 5:1 and 1:5, preferably between 2:1 and 1:2. Similarly, the molar ratio of the organoaluminium halide to the alkyl halide is suitably between 1:10 and 10:1, preferably between 1:5 and 5:1, more preferably from 1:2 to 2:1. For example, if an alkyl aluminium dihalide is used, the three catalyst components are preferably used in substantially equimolar proportions. The catalyst concentration for the reaction would depend upon the feed composition, the product desired, the temperature and the residence time. As a general guide, the catalyst concentration, assuming substantially equimolar proportions are used but based on the organoaluminium halide content thereof, is suitably between 0.01 and 2.0%, preferably between 0.1 and 0.8% by weight of the isobutene-containing feedstock. It has been found that the increase in terminal unsaturation in the product is most significant when the concentration of nitroalkane is greater than 2.5% by weight of the isobutene-containing feedstock.

The reaction may be carried out in the gaseous or in the liquid phase. It is preferable to carry out the reaction in the liquid phase. The catalyst composition in this case is suitably introduced into the polymerisation reactor as a solution thereof in a solvent which is inert under the reaction conditions. Examples of solvents include primary and secondary alkyl halides, aliphatic, alicyclic and cycloaliphatic hydrocarbons. The nitroalkane component of the catalyst composition may be added either directly to the isobutene-containing feedstock or it may initially be mixed with the organoaluminium halide in a hydrocarbon solvent such as normal heptane prior to introduction in the polymerisation reactor. If introduced directly into the isobutene-containing feedstock, it may be either introduced as such or as a solution thereof in a solvent e.g. normal-heptane. It is preferable to add solutions containing the organoaluminium halide and the alkyl halide separately though simultaneously into the polymerisation reactor.

The polymerisation reaction is suitably carried out at a temperature between -30 and +35°C, preferably between 5 and 30°C. The process of the present invention is particularly suitable for producing polyisobutenes having a molecular weight of between 500 and 5000, even more preferably those having a molecular weight of between 750 and 2500. The relatively high proportion of terminal unsaturation in the polymers so produced are particularly suited for producing adducts with maleic anhydride which are eventually converted to the imides by reaction with appropriate amines for use as additives to lubricating oils.

The present invention is further illustrated with reference to the following Examples.

Examples

All results shown in the Table below were obtained using a pilot scale unit at approximately 1.8 litre/hour butadiene raffinate (BDR) throughout. Initiator deactivation was achieved by continuous addition of isopropanol/heptane to the reactor product. The heptane solution of polymer was initially washed with aqueous ammonia then given two further water washes before separation and subsequent stripping to remove firstly heptane and then low molecular weight oligomers (materials distilled between 130°C 100mn Hg and 200°C less than 3 mn Hg). The nitroalkane used was nitroethane.

Nitroethane addition was made to the reaction in two ways viz.

(1) by direct addition either as such or diluted in n-heptane to feedstock or

(2) by initial premixing with aluminium ethyl dichloride ($AlEtCl_2$)/heptane solution.

The butadiene raffinate used as feedstock had the following composition by wt% unless otherwise stated:

| | |
|---|---|
| Isobutane | 4.2 |
| n-butane | 17.0 |
| Butane-1 | 26.2 |
| Isobutene | 42.1 |
| Transbutene-2 | 7.9 |
| Cis-butene-2 | 2.6 |

3

RESULTS SUMMARY: INFLUENCE OF NITROETHANE ADDITION IN CONTINUOUS BDR POLYMERISATION

| Ref No. | Initiator System gmole/tonne feed | | Nitroethane Addition as AlEtCl$_2$ ** Direct to | | Press. psig | Res. Time mins | Temp °C | % IB Convn. | Polymer Grade SSU x10$^{-2}$ 210°F | % Light Polymer | Olefinic Endgroup Distribution*** | | | | |
|---|---|---|---|---|---|---|---|---|---|---|---|---|---|---|---|
| | AlEtCl$_2$ | Bu$^t$Cl | Soln. wt% on feed | Feedstock wt% on feed | | | | | | | A | B | C | D | Others |
| 1 | 3.5 | 4.4 | - | 0.01 | 20 | 16 | 20.5 | 51.6 | ND | 8.9 | 7 | 3 | 47 | 31 | 12 |
| 2 | 10.9 | 10.5 | - | 0.02 | 20 | 16 | 28 | 96 | 4 | 42 | 5 | 0 | 47 | 25 | 23 |
| 3 | 3.6 | 3.5 | - | 0.54 | 20 | 16 | 16.1 | 24.4 | 36 | 3.7 | 7 | 0 | 53 | 24 | 16 |
| 4 | 34.5 | 36.3 | - | 5.3 | 20 | 16 | 24 | 65 | 30 | 4.2 | 37 | 11 | 18 | 32 | 9 |
| 5 | 61 | 50 | 2.5 | - | 20 | 16 | 23 | 60 | 71 | 4.6 | 27 | 5 | 32 | 29 | 7 |
| 6 | 34.1 | 38.6 | 5.2 | - | 20 | 16 | 22.3 | 50 | 72 | less than 1 | 61 | 13 | 10 | 14 | 2 |
| 7* | 73 | 57.5 | 19.3 | - | 30 | 16 | 20 | 29 | 112 | 0 | 68 | 6 | 14 | 10 | 2 |
| T | 3.8 | 4.5 | - | - | 20 | 16 | 27 | 94 | ND | 28 | 4 | 0 | 47 | 27 | 22 |

\* Feedstock 48% Isobutene in Isobutane.

\*\* AlEtCl$_2$ supplied as 20% w/v Soln in n-heptane. This soln diluted by add$^n$ of nitroethane.

\*\*\* A-vinylidene; B-gem dimethyl trisubstitution; C-trisubstitution; D-tetra substitution from $^{13}$CNMR analysis.

T - Comparative Test not according to the invention.

IB - Isobutene

## Claims

1. A process for producing polybutenes by cationic polymerisation of a feedstock comprising isobutenes in the presence of an organoaluminium halide catalyst at a temperature between -50°C and +50°C characterised in that the catalyst is modified with a nitroalkane, R$^1$-NO$_2$ wherein R$^1$ is a C$_1$-C$_4$ alkyl group.

4

2. A process according to claim 1 wherein the feedstock comprising isobutene is a mixed $C_4$ hydrocarbon feedstock resulting from the thermal or catalytic cracking operation, said feedstock containing at least 10% by weight of isobutenes.

3. A process according to claim 1 wherein the feedstock comprises in addition to isobutene, from 10 to 20% by weight of butanes and from 20-40% by weight of normal butenes.

4. A process according to any one of the preceding claims wherein the organoaluminium halide is of the general formula $R_nAlX_{3-n}$ wherein R is a $C_1$ to $C_6$ alkyl radical, X is either chlorine or bromine and n is 1 or 2.

5. A process according to any one of the preceding claims wherein the organoaluminium compound is ethyl aluminium dichloride.

6. A process according to any one of the preceding claims wherein the nitroalkane is nitromethane, nitroethane or nitropropane.

7. A process according to any one of the preceding claims wherein the catalyst composition contains in addition a promoter which is a tertiary alkyl halide.

8. A process according to any one of the preceding claims wherein the molar ratio of the organoaluminium halide to nitroalkane is from 5:1 to 1:5.

9. A process according to any one of the preceding claims wherein the organoaluminium halide and the nitroalkane are used in substantially equimolar proportions and the amount of organoaluminium compound used is from 0.01 to 2.0% by weight of the isobutene-containing feedstock.

10. A process according to any one of the preceding claims wherein said process is carried out in the liquid phase.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | US-A-5 012 030 (K.R.LANE)<br>* claim 1 *<br>--- | 1-10 | C08F4/14<br>C08F210/08 |
| A | EP-A-0 279 456 (KANEGAFUCHI KAGAKU KOGYO KABUSHIKI KAISHA)<br>* claim 1 *<br>----- | 1 | |

TECHNICAL FIELDS SEARCHED (Int. Cl.5 )

C08F

The present search report has been drawn up for all claims

| Place of search | Date of completion of the search | Examiner |
|---|---|---|
| THE HAGUE | 14 APRIL 1993 | Marco Serravalle |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)